# EUROPEAN PATENT APPLICATION

(11) **EP 4 776 245 A1**
(43) Date of publication of application: **15.07.2026**
(21) Application number: 23951133.0
(22) Date of filing: 05.09.2023
(51) Int. Cl.: G06V 20/17

(54) **AUXILIARY IMAGE PROCESSING METHOD AND APPARATUS, AND READABLE STORAGE MEDIUM**

(71) Applicant: SZ DJI Technology Co., Ltd., 518000 Shenzhen (CN)
(72) Inventor: ZHOU, Mengfei, Shenzhen, Guangdong 518000 (CN); WANG, Qingwen, Shenzhen, Guangdong 518000 (CN); CHEN, Shuai, Shenzhen, Guangdong 518000 (CN); LI, Xinwei, Shenzhen, Guangdong 518000 (CN); DUAN, Renzhi, Shenzhen, Guangdong 518000 (CN); PAN, Junyi, Shenzhen, Guangdong 518000 (CN); LI, Bowen, Shenzhen, Guangdong 518000 (CN)
(74) Representative: Appelt, Christian W.
(86) International application number: PCT/CN2023/117115
(87) International publication number: WO 2025/050305

(57) **Abstract**

A method or device for processing an auxiliary image and a readable storage are provided. The method comprises: obtaining image information collected by multiple first image collection devices of an aircraft, the multiple first image collection devices are used to sense obstacles around the aircraft; splitting the image information collected by the first image collection devices for obstacle avoidance in a current flight velocity direction of the aircraft into two transmission paths, the image information of one transmission path is used to sense obstacles around the aircraft to enable the aircraft to autonomously avoid obstacles based on the image information, and at least part of the image information of the other transmission path is used as a first image, the first image is for user viewing, and a second image collection direction corresponding to the first image changes with a change in the flight velocity direction; and outputting the first image, when the change in the flight velocity direction is always within the view angle range of the same first image collection device, the first image always comes from the same first image collection device.

## Description

### Technical Field

The present application relates to the field of images, and in particular, to a processing method, device, and readable storage medium for auxiliary images.

### Background Art

With the development of technologies such as transportation vehicles and robots, their operational safety has been receiving increasing attention from users. For vehicles, the limitations of steering wheels and drive structures result in relatively fixed steering angles and movement paths. Therefore, vehicles can observe the surrounding environment through rearview mirrors oriented in specific directions.

However, for omnidirectional wheel-driven robots and multi-rotor aircraft, their movement paths and steering angles are more flexible and variable, enabling movement modes such as parallel movement and diagonal movement that cannot be achieved by vehicles. If omnidirectional wheel-driven robots and multi-rotor aircraft observe the surrounding environment through rearview mirrors with fixed viewing angles, it is easy to miss the corresponding direction due to changes in the direction of movement, which may lead to safety accidents.

### Summary of the Invention

In view of this, embodiments of the present application provide a processing method, device, and readable storage medium for auxiliary images, aiming to solve the technical problem that, during the movement of a mobile platform, changes in the direction of motion may result in failure to observe the environment in the corresponding direction, thereby improving driving safety.

In a first aspect, some embodiments of the present application provide a processing method for an auxiliary image, comprising: obtaining a current flight velocity direction of an aircraft; in response to the current flight velocity direction of the aircraft being inconsistent with a first image collection direction of the aircraft, obtaining image information of a first view angle collected by an image collection device of the aircraft in a second image collection direction, where the second image collection direction is associated with the current flight velocity direction of the aircraft and is different from the first image collection direction; determining image information of a second view angle from the image information of the first view angle based on the current flight velocity direction of the aircraft; and outputting the image information of the second view angle, where the second view angle is comprised in the first view angle, and the image information of the second view angle is used to obtain an environmental condition in the current flight velocity direction of the aircraft.

In a second aspect, some embodiments of the present application provide a processing method for an auxiliary image, comprising: obtaining composite image information of a first view angle obtained by at least two image collection devices of an aircraft; determining image information of a second view angle from the composite image information of the first view angle based on the current flight velocity direction of the aircraft, where the second view angle is comprised in the first view angle; and outputting the image information of the second view angle, where the image information of the second view angle is used to obtain an environmental condition in the current flight velocity direction of the aircraft.

In a third aspect, some embodiments of the present application provide a processing method for an auxiliary image, comprising: obtaining a current flight velocity direction of an aircraft; and in response to that a first image collection direction of the aircraft is inconsistent with the current flight velocity direction, outputting a first image in a second image collection direction, where the second image collection direction is different from the first image collection direction, and the second image collection direction changes with a change in the flight velocity direction of the aircraft.

In a fourth aspect, some embodiments of the present application provide a processing method for an auxiliary image, comprising: obtaining a current flight velocity direction of an aircraft; and based on the current flight velocity direction of the aircraft, outputting a first image of a second image collection direction and a second image of a first image collection direction, where the second image collection direction changes with a change in a flight velocity direction of the aircraft, a change in the first image collection direction is decoupled from the flight velocity direction of the aircraft, and the first image is used for auxiliary obstacle avoidance.

In a fifth aspect, some embodiments of the present application provide a processing method for an auxiliary image, comprising: obtaining image information collected by a plurality of first image collection devices on an aircraft, where the plurality of first image collection devices are configured to sense obstacles around the aircraft; splitting the image information collected by the first image collection devices for obstacle avoidance in a current flight velocity direction of the aircraft into two transmission paths, where image information of one transmission path is used to sense obstacles around the aircraft to enable the aircraft to autonomously avoid obstacles based on the image information, and at least part of image information of another transmission path is used as a first image, where the first image is for user viewing, and a second image collection direction corresponding to the first image changes with a change in the flight velocity direction; and outputting the first image, where when the change of the flight velocity direction remains within a view angle range of a same first image collection device, the first image always comes from the same first image collection device.

In a sixth aspect, some embodiments of the present application provide a device for processing an auxiliary image, comprising: a memory and a processor, where the memory is configured to store a computer program, the processor is configured to execute the computer program and, when executing the computer program, implement the method according to the first aspect to the fifth aspect.

In a seventh aspect, some embodiments of the present application provide an aircraft, comprising: a memory and a processor, where the memory is configured to store a computer program, the processor is configured to execute the computer program and, when executing the computer program, implement the method according to the first aspect to the fifth aspect.

In an eighth aspect, some embodiments of the present application provide a control terminal, comprising: a memory and a processor, where the memory is configured to store a computer program, the processor is configured to execute the computer program and, when executing the computer program, implement the method according to the first aspect to the fifth aspect.

In a ninth aspect, some embodiments of the present application provide a readable storage medium, the computer-readable storage medium stores a computer program, which, when executed by a processor, causes the processor to implement the method according to the first aspect to the fifth aspect.

According to the embodiments of the present application, by outputting an image associated with the current flight velocity direction, a user can be effectively assisted in viewing the real-time environmental image in the current flight velocity direction, so as to facilitate control based on the environmental image. The present application avoids safety problems caused by collisions due to sudden changes in the flight velocity direction of the aircraft, thereby improving the safety of the aircraft during flight.

It should be understood that the above general description and the following detailed description are merely exemplary and explanatory, and are not intended to limit the present application.

### Brief Description of the Drawings

In order to more clearly illustrate the technical solutions of the embodiments of the present application, the drawings required for the description of the embodiments are briefly introduced below. It is obvious that the drawings described below are some embodiments of the present application. For a person of ordinary skill in the art, other drawings may also be obtained based on these drawings without creative effort.
FIG. 1 is a schematic diagram of the application scenario of a control system provided by some embodiments of this application;
FIG. 2 is a flowchart of possible steps of an auxiliary image processing method provided by some embodiments of this application;
FIG. 3 is a schematic diagram of an aircraft provided by some embodiments of this application;
FIG. 4 is a schematic diagram of an aircraft scenario provided by some embodiments of this application;
FIG. 5 is a schematic diagram of an aircraft scenario provided by some embodiments of this application;
FIG. 6 is a schematic diagram of an aircraft scenario provided by some embodiments of this application;
FIG. 7 is a schematic diagram of an aircraft scenario provided by some embodiments of this application;
FIG. 8 is a schematic diagram of an interaction provided by some embodiments of this application;
FIG. 9 is a schematic diagram of an interaction provided by some embodiments of this application;
FIG. 10 is a flowchart of possible steps of an auxiliary image processing method provided by some embodiments of this application;
FIG. 11 is a flowchart of possible steps of an auxiliary image processing method provided by some embodiments of this application;
FIG. 12 is a flowchart of possible steps of an auxiliary image processing method provided by some embodiments of this application;
FIG. 13 is a flowchart of possible steps of an auxiliary image processing method provided by some embodiments of this application; and
FIG. 14 is a schematic structural diagram of an auxiliary image processing device provided by some embodiments of this application.

### Description of the Embodiments

The following will provide a clear and complete description of the technical solutions in the embodiments of this application with reference to the accompanying drawings in the embodiments of this application. It is obvious that the described embodiments are only a part of the embodiments of this application, not all of them. Based on the embodiments in this application, all other embodiments obtained by a person of ordinary skill in the art without creative efforts fall within the scope of protection of this application.

The flowcharts shown in the accompanying drawings are merely illustrative examples and do not necessarily include all content and operations/steps, nor must they be performed in the described order. For example, some operations/steps can also be decomposed, combined, or partially merged, so the actual order of execution may vary depending on the specific circumstances.

With the development of technologies such as transportation vehicles and robots, their operational safety has increasingly gained users' attention. For vehicles, the limitations of steering wheels and drive structures result in relatively fixed steering angles and motion paths. Therefore, vehicles can observe the surrounding environment through rearview mirrors oriented in specific directions. Vehicles can also display images from cameras on both sides of the vehicle body, enabling users to observe blind spots in the field of view during steering.

However, for robots driven by omnidirectional wheels, multi-rotor aircraft, and the like, their motion paths and steering angles are highly flexible and variable, enabling movements such as parallel motion and diagonal motion that vehicles cannot achieve. If robots driven by omnidirectional wheels or multi-rotor aircraft observe the surrounding environment through fixed-view angle images, sudden changes in motion direction can easily result in an inability to observe the environment in the corresponding direction, leading to safety accidents.

Based on this, this application provides an auxiliary image processing method aimed at addressing the technical problem of being unable to observe the environment in the corresponding direction due to changes in motion direction during the operation of a movable platform, thereby improving operational safety.

The above method can be executed by a movable platform or a control terminal in a control system. The movable platform can be a manned platform or an unmanned platform. The movable platform can be a terrestrial movable platform, such as a land-based robot or a car; it can also be a water-based or underwater movable platform; or it can be an aerial movable platform, such as an aircraft, including multi-rotor aircraft, fixed-wing aircraft, helicopters, etc. The movable platform can also be a dual-use air-land movable platform, such as a flying car. The following takes the movable platform as an aircraft as an example to explain the implementation of this application.

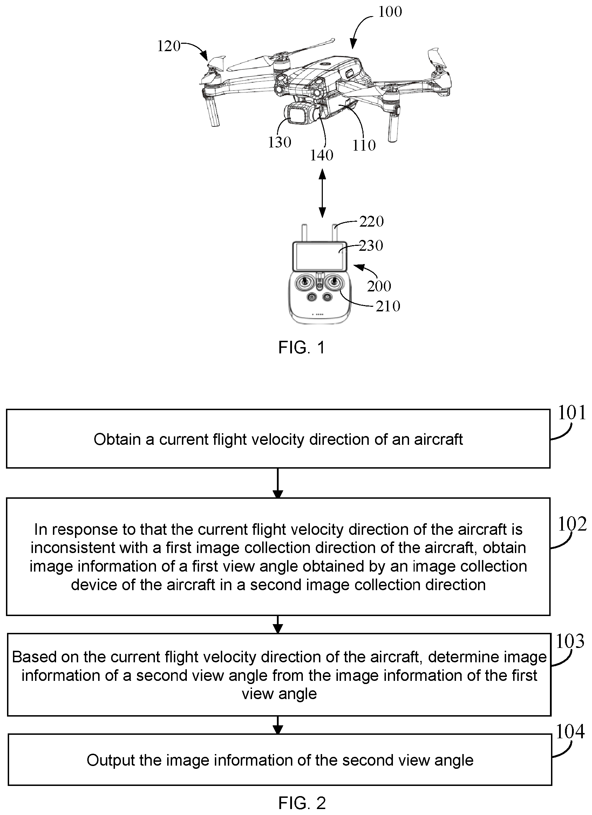

With reference to FIG. 1, which is a schematic structural diagram of a control system provided by some embodiments of this application, the control system may include an aircraft and a control terminal.

As shown in FIG. 1, a control system may include an aircraft 100 and a control terminal 200. The aircraft 100 can be communicatively connected to the control terminal 200. The control terminal 200 can be used to control the aircraft 100. The control terminal 200 may include at least one of a remote controller, a smartphone, or a tablet computer, or at least one of a remote controller, a smartphone, or a wearable device. The wearable device includes a head-mounted display device. The head-mounted display device may include a virtual reality (VR) display device or a first-person view (FPV) display device. In some embodiments, the control terminal 200 may also include terminal equipment for controlling the aircraft, such as operating equipment on a manned aircraft.

In some embodiments, the aircraft 100 includes a body 110, a power system 120, a photography device 130, and a control terminal (not shown in FIG. 1). The body 110 may include a nose. In some embodiments, the aircraft 100 further includes arms. The arms are connected to the body 110. The arms are used to mount the power system. In some embodiments, the power system 120 may be directly mounted on the fuselage 110.

The power system 120 is used to provide flight power for the aircraft. The power system 120 may include a motor and a propeller mounted on the motor and driven by the motor. The power system 120 can drive the body 110 of the aircraft 100 to rotate around one or more rotation axes. The aforementioned rotation axes may include a roll axis, a yaw axis, and a pitch axis. When the power system 120 drives the body 110 to rotate around the yaw axis, the yaw direction of the nose of the body changes. That is, the aircraft can control the yaw rotation of the body 110 by controlling the power system 120. It should be understood that the motor may be a DC motor or an AC motor. Additionally, the motor may be a brushless motor or a brushed motor.

The photography device 130 is directly mounted or mounted via a gimbal on the body 110. The photography device 130 is used for capturing images. The images can be pictures and/or videos. In some embodiments, as shown in FIG. 1, the aircraft may include a gimbal 140. The photography device 130 is mounted on the gimbal 140, and the gimbal 140 is connected to the body 110. In some embodiments, the gimbal 140 can control the yaw rotation of the photography device 130 to adjust its yaw direction. Specifically, the gimbal 140 may include a yaw motor 141. The yaw motor 141 is used to control the yaw rotation of the photography device 130. In some embodiments, the gimbal 140 can control the pitch rotation of the photography device 130 to adjust its pitch direction. Specifically, the gimbal 140 may include a pitch motor. The pitch motor is used to control the pitch rotation of the photography device 130. In some embodiments, the gimbal 140 can control the roll rotation of the photography device 130 to adjust its roll direction. Specifically, the gimbal 140 may include a roll motor. The roll motor is used to control the roll rotation of the photography device 130.

In the yaw direction, the yaw rotation of the photography device 130 and the yaw rotation of the body 110 can be associated. Furthermore, the photography device 130 can yaw rotate by following the yaw rotation of the body 110, or the body 110 can yaw rotate by following the yaw rotation of the photography device 130.

The control terminal may include an input device. The input device can detect control operations from the user of the control terminal. The control terminal can generate control instructions for the aircraft based on the user's control operations detected by the input device. For example, the control terminal can generate yaw control instructions based on the nose yaw control operation of the user of the control terminal detected by the input device and send the nose yaw control instructions to the aircraft; the control terminal can generate pitch control instructions based on the gimbal pitch control operation of the user of the control terminal detected by the input device and send the gimbal pitch control instructions to the aircraft.

With reference to FIG. 1, in some embodiments, the control terminal 200 includes a remote controller. The remote controller is equipped with an input device 210 and a communication device 220. The communication device 220 is a wireless communication device. The wireless communication device may include at least one of a high-frequency radio transceiver, a WIFI module, or a Bluetooth module. The input device 210 is used to generate corresponding control instructions in response to user operations, thereby enabling the remote controller to control the aircraft to adjust its flight attitude and/or flight velocity through these control instructions. The input device 210 includes at least one of buttons, joysticks, dials, or a touch display screen. For example, the input device 210 is a joystick, which is mounted on the body of the remote controller. The remote controller senses the user's control operations on the joystick to generate corresponding control instructions.

In some embodiments, the control terminal 200 can receive images transmitted by the aircraft 100 and display them using the display device 230. The display device 230 may be integrated into the control terminal 200, or the display device 230 may be separately provided from the control terminal 200 and communicatively connected to the control terminal 200. The communication connection may be established through a wired communication connection or a wireless communication connection. For example, the wireless communication connection may be a WiFi connection, a Bluetooth connection, or a high-frequency wireless signal connection.

In some embodiments, the control terminal 200 includes a remote controller, which is equipped with an input device 210 and a communication device 220. The communication device 220 is a wireless communication device. The wireless communication device may include at least one of a high-frequency radio transceiver, a WIFI module, or a Bluetooth module. The input device 210 is used to generate corresponding control instructions in response to user operations, thereby enabling the remote controller to control the aircraft to adjust its flight attitude and/or flight velocity through these control instructions. The input device 210 includes at least one of buttons, joysticks, dials, or a touch display screen. For example, the input device 210 is a joystick, which is mounted on the body of the remote controller. Users can generate control instructions by using buttons, joysticks, or dials, or by performing input operations on the touch display screen, which is not limited herein.

The following will elaborate on the specific implementation of this application in detail with reference to the accompanying drawings. It should be understood that this exemplary description does not constitute a limitation on this application.

With reference to FIG. 2, FIG. 2 is a schematic flowchart of possible steps provided by some embodiments of this application. As shown in this figure, this application provides a method for processing an auxiliary image, including:
Step 101, obtain a current flight velocity direction of an aircraft.
Step 102, in response to that the current flight velocity direction of the aircraft is inconsistent with a first image collection direction of the aircraft, obtain image information of a first view angle obtained by an image collection device of the aircraft in a second image collection direction; where the second image collection direction is associated with the current flight velocity direction of the aircraft and is different from the first image collection direction.
Step 103, based on the current flight velocity direction of the aircraft, determine image information of a second view angle from the image information of the first view angle.
Step 104, output the image information of the second view angle, where the second view angle is comprised in the first view angle, the image information of the second view angle is used to obtain an environmental condition in the current flight velocity direction of the aircraft.

It should be noted that the above steps 101-103 can be executed by a control terminal wirelessly connected to the aircraft, or by the aircraft's own control device, or some steps can be executed by the aircraft and the remaining steps by the control terminal, which is not limited herein.

In step 101, optionally, the obtaining of the flight velocity direction of the aircraft can be performed based on various methods.

For example, when the above step 101 is executed by the aircraft, in some embodiments, obtaining the current movement direction of the aircraft can be determined by acquiring real-time geographic location signals, such as GPS signals; in some embodiments, for multi-rotor aircraft, the movement direction corresponding to the current attitude can also be calculated by obtaining attitude information from the IMU; in some embodiments, the current movement direction can also be determined by the acceleration sensor in the IMU or by calculating the motor output, which is not limited herein.

In some scenarios, the first image collection direction can be the shooting direction of the photography device mounted on the aircraft, meaning the aircraft may have a shooting function. This first image collection direction is the image collection direction of the aircraft's main camera. For example, when the aircraft is an unmanned platform, users can often observe the aircraft's surrounding environment through the footage captured by the photography device to assist in controlling the flight. In some scenarios, the first image collection direction may change along with the attitude of the photography device. However, since the photography device needs to balance shooting effects, this often prevents users from comprehensively observing the aircraft's surrounding environment, leading to safety issues.

In some scenarios, the first image collection direction can be the sensing direction of the image collection device used by the aircraft for environmental perception. For example, the first image collection direction can be the sensing direction of a monocular vision image collection device, and so on. The image collection device may include an image sensor and a lens. Through the lens and image sensor, the aircraft can determine the field of view (maximum FOV) and the current viewing angle of the image collection device, thereby determining the image collection direction based on the current viewing angle. The image collection device can be a wide-angle camera, fisheye camera, etc., which will not be listed one by one herein.

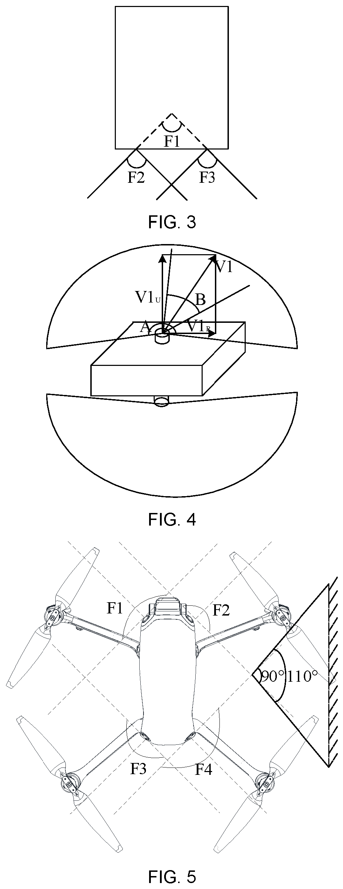

The processor can obtain image information different from the first image collection direction when the flight velocity direction of the aircraft is inconsistent with the first image collection direction, enabling the user to observe a more comprehensive environment around the aircraft. The first view angle can be the field of view (maximum FOV) of the image collection device or a view angle determined by an algorithm. The image information of the first view angle can be acquired by a single image collection device or by multiple image collection devices through methods such as image stitching or image compositing. Referring to FIG. 3, the first view angle in FIG. 3 can be either F2 or F3, or it can be the F1 view angle formed by stitching F2 and F3. That is, the first view angle can be the view angle of a single image collection device or a view angle stitched from multiple image collection devices, which is not limited herein.

It should be understood that the first view angle corresponds to the second image collection direction, which is different from the first image collection direction. Specifically, the central axis of the first view angle may substantially coincide with the second image collection direction, or the second image collection direction may be located at the central position of the first view angle.

In the above step 103, since the first view angle may be the optical field of view of the image collection device, the first view angle may be relatively large, making it inconvenient for display or for the user to view. For the aircraft, observing the environment in the direction of the flight velocity during travel is very important. Therefore, the processor can process the image information of the first view angle to obtain the image information of the second view angle corresponding to the flight velocity direction. The second view angle may be a partial view angle within the first view angle.

The flight velocity direction of the aircraft can change within the first view angle and always remain within the second view angle during the change. In some embodiments, the central axis of the second view angle can coincide with the flight velocity direction. In some embodiments, the flight velocity direction can be located at the central position of the second view angle. The second view angle can be smaller than the first view angle and within the range of the first view angle. Specifically, the second view angle can be a partial view angle within the first view angle. For example, when the first view angle is the maximum field of view of a single image collection device, the second view angle can be a smaller field of view obtained by zooming or image cropping of that image collection device; when the first view angle is a composite view angle obtained from multiple image collection devices, the second view angle can be the field of view corresponding to one of the sensors, which will not be listed one by one herein.

By outputting the image information of the second view angle through step 104, users can clearly and explicitly view the environmental images along the flight velocity direction of the aircraft and respond accordingly. Furthermore, this can effectively prevent safety issues, such as collisions in the flight velocity direction, that arise when the aircraft's flight velocity direction frequently changes, and a fixed-view angle image collection device cannot comprehensively and continuously observe the environmental images in the flight velocity direction.

It should be understood that the flight velocity direction is used to indicate the direction of the aircraft's body position change. For four-wheel-drive vehicles or fixed-wing aircraft, the flight velocity direction may be associated with the orientation of the vehicle's front. For multi-rotor aircraft, however, the flight velocity direction can be decoupled from the nose orientation, allowing for more flexible changes in movement direction. For example, a drone can fly backward, sideways, or diagonally.

In some embodiments, the flight velocity direction may include a horizontal component direction and a vertical component direction. Specifically, the horizontal component direction may include any of forward, backward, left, or right. The vertical component direction may include upward or downward.

For an aerial vehicle (aircraft), the direction of its motion speed can include both the horizontal and vertical directions relative to the body, thus requiring simultaneous consideration of environmental information in both the horizontal and vertical directions. The aforementioned step 102 may specifically include:
Based on the horizontal component direction and the vertical component direction of the aircraft's flight velocity direction, the image information of the second view angle can be determined based on the image information of the first view angle.

With reference to FIG. 4, the aircraft in FIG. 4 can be equipped with image collection devices positioned above and below. The first view angle can be the A view angle in FIG. 4, while the aircraft's flight velocity direction V1 includes an upward vertical component V_{1U} and a rightward horizontal component V_{1R}. The second view angle can then be the B view angle in FIG. 4. The B view angle also changes with the flight velocity direction. Furthermore, the central axis direction of the B view angle can align with the aircraft's flight velocity direction. In this way, the image collection device can simultaneously obtain environmental information in front of and above the aircraft through the image information of the B view angle, further enhancing the aircraft's safety.

Optionally, the aircraft can be equipped with multiple image sensors positioned at different orientations and facing different directions to achieve environmental perception in multiple directions around the aircraft. For example, referring to FIG. 5, as shown in FIG. 5, four image collection devices can be placed at the four corners of the aircraft. Each image collection device can have a field of view range of 180° in the surround direction (F1-F4). Through these four image collection devices, the aircraft can output omnidirectional environmental images in the horizontal direction. Additionally, image collection devices can be placed on the top and bottom sides of the aircraft to sense the environment in the vertical direction, respectively.

Optionally, the image information of the second view angle can be obtained by one or more image collection devices.

In some embodiments, the flight velocity direction of the aircraft may be oriented in both horizontal and vertical directions. To account for the environment in both the horizontal and vertical directions of the aircraft, the image information of the second view angle may include image information acquired by at least two image collection devices. The collection directions of these at least two image collection devices correspond to the horizontal component direction and the vertical component direction, respectively.

Of course, in some embodiments, to account for the environment in both the horizontal and vertical directions of the aircraft, it is also possible to acquire images in both horizontal and vertical directions by setting image collection devices tilted at the corners of the aircraft, with specific configurations depending on the actual situation.

Since the flight velocity direction of the aircraft can change in real time, optionally, the second view angle can also change with the flight velocity direction. In some embodiments, the method may further include:
Change the second view angle based on a change in the flight velocity direction.

Further, changing the second view angle based on a change in the flight velocity direction may specifically include at least one of the following:
Based on the change in the flight velocity direction, change the image collection device corresponding to the second view angle;
Based on the change in the flight velocity direction, change the image collection direction of the image collection device corresponding to the second view angle;
Based on the change in the flight velocity direction, change the size of the second view angle.

Continuing to refer to FIG. 4, the flight velocity direction of the aircraft in FIG. 4 changes from V₁ to V2. The image collection device corresponding to the second view angle can switch from the upper image collection device to the lower image collection device. Alternatively, in some embodiments, the image collection device corresponding to the second view angle can adjust its image collection direction by changing its own attitude, receiving/reflecting optical paths, or altering the sensor's control method, so that the corresponding second view angle changes in accordance with the flight velocity direction. Alternatively, the second view angle can adjust its own view angle size based on changes in the flight velocity direction, for example, by increasing the view angle to better cover the environmental images along the flight velocity direction.

For example, in some embodiments, when the movable platform changes its flight velocity direction from a first direction to a second direction, it can control the image collection device to change from the view angle corresponding to the first direction to the view angle corresponding to the second direction.

Continuing to refer to FIG. 3, in a specific implementation, the vertical component directions of the first direction V₁ and the second direction V₂ in FIG. 3 are different. When the flight velocity direction changes from the first direction to the second direction, the second view angle corresponding to the aircraft moving along the second direction, compared to when the aircraft moves along the first direction, can change at least along the pitch axis direction or the height direction of the aircraft's body.

In some embodiments, when one of the first direction and the second direction includes only a horizontal component direction, and the other includes both a horizontal component direction and a vertical component direction, the second view angle corresponding to the aircraft moving in the second direction may change at least along the pitch axis direction or the altitude direction of the aircraft's body compared to when the aircraft moves in the first direction.

In this way, when the aircraft transitions from moving in the horizontal direction to at least moving in the vertical direction, the second view angle can change along the pitch axis and/or along the altitude direction of the aircraft, to raise or lower the view angle, ensuring the capture of images in the vertical direction.

In some embodiments, during the process of changing the second view angle, the image collection device can further display images located between the two view angles during the view angle change, so as to make the image transition smoother and easier for the user to observe. Controlling the image collection device to change from the view angle corresponding to the first direction to the view angle corresponding to the second direction may specifically include:
Obtain image information of the view angle between the view angle corresponding to the first direction and the view angle corresponding to the second direction;
During the process of the image collection device changing from the view angle corresponding to the first direction to the view angle corresponding to the second direction, output the image information of the view angle between the view angle corresponding to the first direction and the view angle corresponding to the second direction.

Optionally, the trigger condition for changing the second view angle can be determined based on changes in motion speed to adapt to actual scenarios. In some embodiments, the aircraft may frequently make small directional changes. To avoid rapid image changes due to frequent switching of the view angle, the aircraft changes the second view angle based on changes in the direction of flight velocity, including: changing the second view angle when the direction of flight velocity changes and the speed exceeds a preset threshold.

In some embodiments, to avoid rapid image changes due to frequent switching of the view angle, the image collection device changes the second view angle based on changes in the direction of flight velocity, which may also include: changing the second view angle when the direction of flight velocity changes and the duration of maintaining the changed flight velocity direction exceeds a preset threshold.

In some embodiments, the aircraft may move along a preset trajectory. To facilitate the user in anticipating the environment corresponding to the upcoming change in the direction of flight velocity, the image collection device changes the second view angle based on changes in the direction of flight velocity, including:
During the process of moving based on a preset trajectory, the aircraft changes its flight velocity direction as predicted based on the preset trajectory; before the flight velocity direction changes, the image collection device changes the second view angle based on the predicted flight velocity direction. The preset trajectory may be a trajectory pre-set by user input operations or a path file sent by other devices. The preset trajectory may include position information of multiple trajectory points, allowing the aircraft to determine the flight velocity direction based on the position information of two adjacent trajectory points, and thus predict the change in the flight velocity direction after reaching the next waypoint. Changing the second view angle can be executed upon reaching the waypoint or before reaching the waypoint, with no limitation herein.

In this way, during the process of moving along a preset trajectory, the aircraft can display images corresponding to the predicted flight velocity direction to the user in advance, thereby facilitating the user in monitoring the environmental information in the direction the aircraft is about to head toward, enabling timely control responses.

A single image sensor simultaneously capturing images in the horizontal and vertical directions of the aircraft may be affected by occlusion from the aircraft's body, impacting the image. In some embodiments, the image collection device changes the second view angle based on changes in the direction of flight velocity, including:
When the motion speed changes from including only a horizontal component or a vertical component to including both horizontal and vertical components, control the aircraft to switch from acquiring image information of the second view angle with one sensor to acquiring image information of the second view angle with at least two sensors.

In this way, when the aircraft moves in the horizontal or vertical direction, using a single image sensor to acquire image information in the horizontal or vertical direction can effectively reduce resource consumption. When the aircraft has both horizontal and vertical components, multiple image sensors can be used to acquire image information to better avoid occlusion by the aircraft's body and more comprehensively capture environmental images.
Furthermore, at least two sensors can be used to separately acquire image information in the horizontal direction and the vertical direction, achieving greater coverage of environmental images.

From the above content, it can be understood that the image collection device can adjust the second view angle by changing its attitude or by switching the image collection device corresponding to the second view angle. In some embodiments, changing the second view angle based on changes in the direction of flight velocity includes:
When the change in the direction of flight velocity is less than a preset threshold, the second view angle is changed by adjusting the imaging range of the image collection device acquiring the image information of the second view angle, and/or by changing the attitude of the image collection device acquiring the image information of the second view angle;
When the change in the direction of flight velocity is greater than or equal to the preset threshold, the image collection device acquiring the image information of the second view angle is changed. The preset threshold may be an angle threshold.

In this way, when the change in the direction of the aircraft's flight velocity is small, adjusting the image collection direction can suffice to meet the requirements for changing the second view angle. This helps improve efficiency and reduce resource consumption. When the change in the direction of the aircraft's flight velocity is significant, changing the image collection device corresponding to the second view angle can avoid limitations caused by the structure or hardware when adjusting the image collection direction with a single image collection device.

In some scenarios, users need to see images with a wider range, while the imaging range of images captured by a single image collection device's view angle may be smaller than the user's required range. Since the image information of the second view angle may include image information collected by one or more image collection devices, in some embodiments, determining the image information of the second view angle from the image information of the first view angle based on the aircraft's flight velocity direction includes:
When the second view angle is larger than the view angle of the corresponding image collection device in the aircraft, determine the image information of the second view angle based on the image information acquired by at least two image collection devices of the aircraft.

Furthermore, referring to FIG. 5, if the aircraft acquires forward image information through two image collection devices, and the overlapping angle of the view angle range between the two image collection devices is 90°, while the user's required image view angle is 110°, then to ensure that the aircraft can acquire a 110° image when moving forward at any angle, the image information acquired by the two image collection devices can be used to determine the image information of the second view angle.

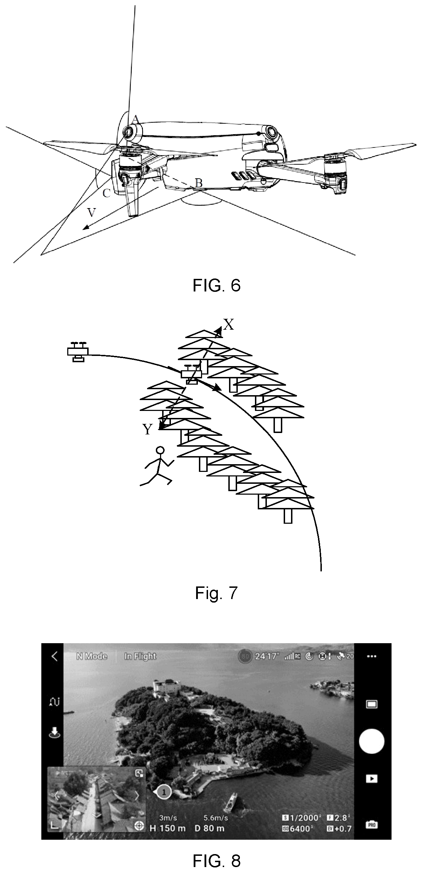

In some embodiments, to reduce the resource consumption caused by multiple image sensors simultaneously acquiring image information, one or more image collection devices of the aircraft can be determined based on the direction of flight velocity. In some embodiments, the angle between the optical axis of the one or more image collection devices and the direction of flight velocity is smaller than the angle between the optical axis of other image collection devices of the aircraft and the direction of flight velocity. For example, referring to FIG. 6, if the aircraft is moving forward and downward, only the image information from the forward image collection device A and the downward image collection device B may be acquired, and the image information of the second view angle can be determined based on the aforementioned image information. This can effectively reduce the resource consumption for outputting the second view angle image and improve efficiency.

Similar to the second view angle, in some embodiments, the image information of the first view angle can also be composited from the image information of multiple image collection devices with different view angles. To avoid repetition, this will not be elaborated further herein.

Optionally, the method of determining the image information of the second view angle from the image information of the first view angle can be set according to actual needs. In some embodiments, the image information of the second view angle is obtained by cropping the image information of the first view angle. In some embodiments, the image information of the second view angle is obtained by locally rendering the image information of the first view angle, and these methods are not listed exhaustively herein.

According to the above content, the image collection device can use the collected image information as image output to assist user control. In some embodiments, the image collection device can also be used to output image information for autonomous obstacle avoidance. Specifically, the above image information can be combined with obstacle recognition algorithms, depth information, etc., to realize the recognition of obstacles and the distance to the obstacles, so as to automatically control the aircraft to perform autonomous obstacle avoidance operations. In this way, the above image information can be used simultaneously for user viewing and for recognizing obstacles and the distance to obstacles, and for autonomous obstacle avoidance, thereby improving the utilization rate of image information and further reducing resource occupation.

In some embodiments, in order to ensure that the image viewed by the user does not experience significant shaking due to the movement of the aircraft, which would affect the viewing experience, the image information of the second view angle is obtained by performing stabilization on the image information used for obstacle avoidance. Specifically, the image information of the second view angle can be stabilized based on the attitude information of the aircraft. In some embodiments, before outputting the image information of the second view angle, the method may further include: acquiring the attitude information of the aircraft; performing stabilization processing on the image information of the second view angle based on the attitude information.

As mentioned above, in addition to acquiring surrounding environmental images through the image collection device to perceive the surrounding environment, the aircraft can also perform shooting through the image collection device.
In some embodiments, the method may further include: acquiring image information of a third view angle through the image collection device of the aircraft; outputting the image information of the third view angle. The third view angle can be determined based on the shooting direction. The shooting direction can be the first image collection direction. Continuing to refer to FIG. 6, the view angle of the image collection device C in FIG. 6 can be the third view angle.

For some image collection devices, their own view angle range can reach 360°, that is, a panoramic range. Referring to FIG. 4, the aircraft shown in FIG. 4 can realize panoramic image acquisition through the upper and lower image collection devices. Therefore, the above first view angle can be a larger view angle, such as the upper hemisphere or lower hemisphere view angle shown in FIG. 4. In some embodiments, in order to improve the utilization rate of image information, the image information of the third view angle can also be obtained from the image information of the first view angle.

In some embodiments, the image information of the third view angle can also be acquired based on the image collection device corresponding to the photography device of the aircraft, in order to obtain images with higher shooting quality.
In some embodiments, the image information of the first view angle can include color information. The image generated based on the image information of the second view angle can be a color image to enhance the user's viewing experience; in some embodiments, the image information of the first view angle can also include only grayscale information, and the image generated based on the image information of the second view angle can be a grayscale image, in order to reduce cost and resource occupation, which is not limited herein.

Optionally, the above-mentioned method of outputting the image information of the second view angle can be set according to actual needs. In some embodiments, the image information of the second view angle can be transmitted to a monitoring/control terminal to facilitate real-time viewing by the user.

For real-time image transmission, if it is necessary to simultaneously display images of multiple view angles on the aircraft, this places high demands on image transmission bandwidth and the processing capability of the control terminal.

Based on this, in order to reduce the requirements for image transmission, in some embodiments, the image information of the third view angle and the image information of the second view angle can be output through a single image transmission channel. Specifically, the image information of the third view angle and the image information of the second view angle can first be stitched together, and the stitched image is transmitted to the control terminal through a single image transmission channel. After decoding at the control terminal, the stitched image is cropped to separately display the image of the second view angle and the image of the third view angle. This reduces the requirements on image transmission bandwidth and the hardware of the control terminal, thereby reducing costs.

As described above, the aircraft can be an aircraft. For the aircraft, the flight velocity direction of the aircraft can include a vertical component direction, and the aircraft also has some flight modes, such as landing, circling, etc. Optionally, in addition to including image information in the flight velocity direction, the first image can also include image information in other directions to adapt to the flight modes of the aircraft. Specifically, the first image can be obtained by compositing or stitching image information from multiple directions.

In some embodiments, when the aircraft is in the return-to-home process, the image information of the second view angle includes at least one of the following:
The image information below the aircraft; the image information in the direction of the aircraft toward the return point/location; specifically, the image information of the second view angle can be obtained by compositing/stitching the image information of at least the above two factors. In this way, during the return process of the aircraft, the image information of the second view angle can simultaneously include the image information below the aircraft and the image information of the heading direction, so that the user can view the environment below the aircraft, in the heading direction, and at the return point simultaneously from one image, thereby facilitating the user to better control the aircraft to perform landing.

In some embodiments, when the aircraft is in the landing process, the image information of the second view angle can include image information in at least one direction of the aircraft's surround view direction, and/or image information below the aircraft. In this way, the user can simultaneously view the environment below the aircraft and the surround environment from one image. Specifically, the user can adjust the landing position based on the downward view image of the aircraft, and the user can avoid collisions that may occur when adjusting the landing position based on the surround view image, thereby facilitating the user to better control the aircraft to perform landing.

In some embodiments, during the process of the aircraft flying around a target object, the image information of the second view angle further includes at least one of the following: image information perpendicular to the flight velocity direction of the aircraft; image information at a fixed angle to the flight velocity direction. Referring to FIG. 7, in FIG. 7 the aircraft flies clockwise around the target object. At this time, the flight velocity direction of the aircraft is along the tangent direction of the circumference, and there are obstacles both inside and outside of the aircraft. By displaying image information perpendicular to the flight velocity direction of the aircraft (the X direction or Y direction in the figure) and/or image information at a fixed angle to the flight velocity direction, safety issues caused by incomplete observation of the environment inside/outside the surround path during the circling process of the aircraft can be avoided. In some embodiments, during the process of the aircraft tracking the target object, the image information of the second view angle includes image information along the flight velocity direction of the aircraft, and/or image information along the direction toward the target object. The aircraft can track the target object by using the image information of the target object acquired through the image collection device, or by using the positioning device carried by the target object. When the aircraft tracks through the positioning device carried by the target object, the user can simultaneously observe the environment along the flight velocity direction and the target object through the image collection device, adjust the tracking path, shooting composition, etc., avoiding the problem that the user cannot clearly know the relative position between the target object and the aircraft. In scenarios where the positioning device has large errors or fails, this can also effectively improve safety and enhance the user experience.

Optionally, the method of outputting the image information of the second view angle can be sending the image information of the second view angle to an external device; it can also be displaying the image corresponding to the image information of the second view angle.

In some embodiments, outputting the image information of the second view angle includes: displaying a first image corresponding to the image information of the second view angle and a second image corresponding to the image information of the third view angle.

Furthermore, in some embodiments, when displaying the first image and the second image on the same interface, the first image can occupy a portion of the area of the second image, or the second image can occupy a portion of the area of the first image. Referring to FIG. 8, the small image in the lower left corner of FIG. 8 can be the first image, and the large image can be the second image. In this way, by overlapping the first image and the second image, the occupation of the image display area on the display interface can be reduced, and at the same time, the image display can be in a regular shape, which is convenient for the control terminal to display on the interface.

Optionally, the display ratio, display position, etc. of the first image and the second image can be switched based on user input. In some embodiments, the method may further include:
Receive a first user input;
In response to the first input, switch the display of the first image and the second image.

Further referring to FIG. 8, the first input can be a touch input, such as clicking, double-clicking, long pressing, or short pressing on the first image, the second image, or a switch control; the first input can also be a non-touch input, such as voice input, gesture input, etc., which are not enumerated here one by one.

Furthermore, switching the display can include switching the display ratio, switching the display interface, or switching the display size, etc. In some embodiments, switching the display of the first image and the second image includes: switching the display ratio of the first image and the second image on the same interface; or switching the display interface to display the first image or the second image.

Since the user can also view the surrounding environment by viewing the shooting image, in some embodiments, the above method may further include:
Change the display mode of the first image and the second image based on the shooting direction and the flight velocity direction of the aircraft.

In some embodiments, when the shooting direction is consistent with the flight velocity direction, the second image can be displayed preferentially. In some embodiments, when the shooting direction is inconsistent with the flight velocity direction, the first image can be displayed with priority.

Priority display can be enlarging the display size of the image or displaying only that image. In this way, when the shooting direction is roughly consistent with the flight velocity direction, the user can prioritize viewing the shooting effect of the shooting image while also observing the surrounding environment of the aircraft; whereas when the shooting direction is inconsistent with the flight velocity or motion speed, the user can prioritize observing the surrounding environment of the aircraft to ensure safety.

In some scenarios, the user may need to observe the image of a fixed view angle. In some embodiments, the method further includes:
Receive a second user input for the first image;
In response to the second input, control the view angle of the first image to remain unchanged.

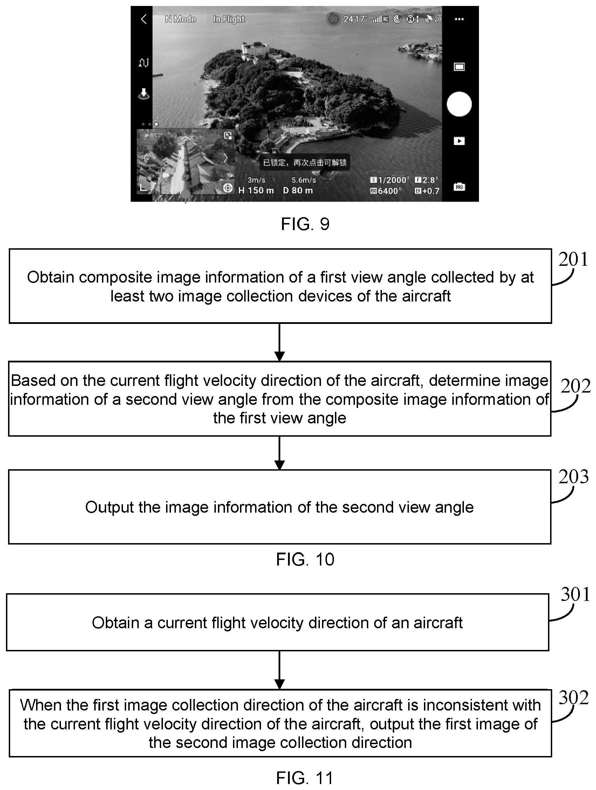

The second input is similar to the first input but can be designated for different inputs. For example, referring to FIG. 9, the user can long-press the first image to lock the current view angle of the first image. Thus, the first image will maintain the locked view angle until it is unlocked. For instance, while the aircraft is generally flying forward to the left, there may be moments when it flies forward to the right. During these moments, the view angle of the first image can be locked to forward to the left. This way, the user can observe a fixed view angle through input, allowing the user to observe the fixed view angle direction of the aircraft in certain scenarios, thereby avoiding changes in the image view angle caused by changes in the aircraft's velocity direction.

Of course, in some embodiments, it is also possible to enable the user to continuously observe a fixed view angle by adding a display screen with a fixed view angle, which is not limited herein.

In some scenarios, the user may need to briefly observe images from other directions of the aircraft. For example, the user may need to observe the environment in the direction of a turn before executing the turn. By changing the view angle of the first image, observation of the environment in other directions of the aircraft can be achieved.

Continuing to refer to FIG. 8, in some embodiments, the method further includes:
Receive a third input from the user on the first image;
In response to the triggering of the third input, change the view angle of the first image;
In response to the ending of the third input, restore the view angle of the first image.

In FIG. 8, the user can touch the direction control on the first image to change the direction of the view angle of the first image. Further, the degree of change in the direction of the view angle can be determined based on the duration of the touch. For example, in some embodiments, the longer the duration of touching the direction control, the greater the angle by which the view angle of the first image deviates from the original view angle. When the user stops touching the direction control, the view angle of the first image will revert to the state before receiving the third input. This way, the user can observe the environment from other view angles at any time through the third input and can restore the view angle by stopping the third input. This enhances the operational convenience for the user when viewing the environment around the aircraft.

Of course, in some embodiments, when the user touches the direction control on the first image, the view angle of the first image can be changed to the corresponding fixed view angle in that direction. When the user long-presses the direction control on the first image for a preset duration, the view angle of the first image is locked to that view angle, allowing the user to change and lock the view angle of the first image with a single touch operation, thereby enhancing operational convenience.

Optionally, obstacle information can also be displayed on the first image to facilitate the user in identifying obstacles, enabling more timely obstacle avoidance operations. In some embodiments, the above method may further include: displaying the first image based on obstacle information along the flight velocity direction of the aircraft. The obstacle information may include the contour information of the obstacle, the distance information of the obstacle, the type information of the obstacle, etc. Specifically, the obstacle information can be displayed through numerical annotations, color labels, text prompts, or localized zoomed-in displays, which is not limited herein.

In some embodiments, the method further includes: when the distance between the aircraft and an obstacle in the direction of the view angle of the first image is less than a preset threshold, displaying prompt information on the first image to enable the user to be aware of the obstacle in the direction of the view angle of the first image and respond promptly, thereby enhancing the safety of the aircraft's operation.

In some embodiments, to more intuitively display obstacles in the environment for user review, the above method may further include:
Display image information of a second view angle based on obstacle information along the flight velocity direction of the aircraft. The image information of the second view angle can be displayed in combination with depth information, specifically by using colors or annotations to indicate the obstacle's information and distance, so as to facilitate the user in performing obstacle avoidance control based on the obstacle's information.

In some embodiments, the user can manually change the size or orientation of the second view angle through input. Referring to FIG. 8 or FIG. 9, the user can adjust the second view angle by pinching with two fingers, and change the orientation of the second view angle by tapping on the direction within the display controls.

It should be understood that the method embodiments for user interaction described above can be executed by a control terminal wirelessly connected to the aircraft or by the control device of the aircraft itself, which is not limited herein. In the embodiments of the present application, the display form of the image information of the second view angle can be changed through user input, allowing users to select the image display mode according to their actual needs, further enhancing the user experience.

With reference to FIG. 10, some embodiments of the present application also provide a method for processing auxiliary images, including:
Step 201: Obtain composite image information of a first view angle collected by at least two image collection devices of the aircraft.
Step 202: Based on the current flight velocity direction of the aircraft, determine image information of a second view angle from the composite image information of the first view angle, where the second view angle is included within the first view angle.
Step 203: Output the image information of the second view angle, where the image information of the second view angle is used to obtain the environmental conditions in the direction of the aircraft's current flight velocity.

Unlike the aforementioned Step 102, the image information of the first view angle in Step 201 can be composited from the image information collected by at least two image collection devices. Meanwhile, the image information of the second view angle in Step 202 can be partial image information from the composited image information. In this way, by compositing the image information obtained from multiple image collection devices and then determining and outputting partial image information from the composited image based on the flight velocity direction, it is possible to avoid the limitation of a single image collection device, which, due to its restricted field of view, cannot output image information beyond that field of view. This addresses the issue of a limited visible area for the user. It also enables the image information of the second view angle to be determined from an image covering a larger range. This is more advantageous when the aircraft's flight velocity direction changes significantly or frequently, as the image information of the second view angle can consistently adapt to changes in the flight velocity direction.

It should be understood that the specific implementation of the method embodiments in Steps 201-203 can be specifically referred to the description of the method embodiments in Steps 101-103, and to avoid repetition, they will not be reiterated herein.

With reference to FIG. 11, some embodiments of the present application also provide a method for processing auxiliary images, including:
Step 301: Obtain a current flight velocity direction of an aircraft.
Step 302: When the first image collection direction of the aircraft is inconsistent with the current flight velocity direction of the aircraft, output the first image of the second image collection direction; where the second image collection direction is different from the first image collection direction, and the second image collection direction changes with the change in the flight velocity direction of the aircraft.

When the above Step 301 is executed by the control terminal, obtaining the current flight velocity direction of the aircraft may involve receiving flight velocity information sent by the aircraft.

The output of the first image in the second image collection direction may involve displaying the first image in the second image collection direction or sending the first image to an external device, which is not limited herein.

Optionally, the first image can be obtained based on the aircraft's image collection device, specifically determined by the image information of the first view angle in the above embodiments or by the image information of the second view angle in the above embodiments. The first image collection direction and the second image collection direction can refer to the explanations in the above embodiments, and to avoid repetition, they will not be reiterated herein.

In some embodiments of the present application, the flight velocity direction of the aircraft is obtained through step 301, and the first image collected in the second image collection direction of the aircraft is output through step 302 in a case where the first image collection direction of the aircraft is inconsistent with the flight velocity direction of the aircraft. Thus, the user can obtain environmental information corresponding to the direction of the aircraft through the first image, which facilitates the user to perform corresponding control and improves the safety of the aircraft in flight.

In some embodiments, the second image collection direction may be determined based on the vertical flight velocity direction and the horizontal flight velocity direction of the aircraft.

In some embodiments, in order to facilitate the user to observe the shooting effect, the method may further include: outputting a second image. The view angle of the second image corresponds to the shooting direction of the main camera of the aircraft. Of course, in other optional embodiments, the second image may also be acquired by an image collection device that does not change with the flight velocity direction, such as an image collection device with a fixed view angle, etc.

In some embodiments, the flight velocity direction may be used to indicate the direction of the body position change of the aircraft. In some embodiments, the flight velocity direction may include a component along the horizontal direction of the aircraft and a component along the vertical direction of the aircraft. In some embodiments, the flight velocity direction may include a horizontal component direction and a vertical component direction. In some embodiments, the first image includes image information in the horizontal component direction of the flight velocity direction and image information in the vertical component direction of the flight velocity direction. In some embodiments, the horizontal component direction may include at least one of front, rear, left, and right. In some embodiments, the vertical component direction may include up, and/or down.

In some embodiments, the aircraft includes a first image collection device and a second image collection device. The first image is acquired based on the first image collection device; the second image is acquired based on the second image collection device. The view angle of the first image collection device and the view angle of the second image collection device are oriented in different directions.

In some embodiments, the first image collection device is used to perceive/sense the surrounding environment of the aircraft.

In some embodiments, the second image collection device is used to acquire image information of the photography device carried by the aircraft. In some embodiments, the first image is obtained based on image information having a first view angle through processing. The first image has a second view angle, and the second view angle is included in the first view angle.

In some embodiments, the first image is a partial image obtained through post-processing after compositing image information from at least two image collection devices. In some embodiments, outputting the first image in the second image collection direction collected by the aircraft includes: changing the imaging range of the first image based on the change in the flight velocity direction of the aircraft.

The imaging range of the first image may be determined based on the view angle and imaging distance of the image collection device acquiring the first image. Optionally, the manner of changing the imaging range of the first image may be selected according to actual needs. In some embodiments, outputting the first image in the second image collection direction collected by the aircraft may specifically include: changing the view angle of the image collection device corresponding to the first image based on the change in the flight velocity direction of the aircraft; changing the image collection device corresponding to the first image based on the change in the flight velocity direction of the aircraft; changing the imaging range corresponding to the first image based on the change in the flight velocity direction of the aircraft.

In some embodiments, changing the imaging range of the first image based on the change in the flight velocity direction of the aircraft includes: in a case where the flight velocity direction changes and the motion speed is greater than a preset threshold, changing the imaging range of the first image.

In some embodiments, in a case where the flight velocity direction changes and the duration of the change being maintained is greater than a preset threshold, changing the imaging range of the first image.

In some embodiments, during the process of operating based on a preset trajectory, the speed change is predicted based on the preset trajectory, and the imaging range of the first image is changed before the speed change.

In some embodiments, in a case where the motion speed changes from a first direction to a second direction, the view angle of the first image is controlled to change from the view angle corresponding to the first direction to the view angle corresponding to the second direction.

In some embodiments, in a case where the flight velocity direction changes from a first direction to a second direction, the imaging range of the first image when the aircraft moves along the second direction changes at least in the vertical direction of the aircraft compared to the imaging range when the aircraft moves along the first direction. One of the first direction and the second direction includes only a horizontal component direction, and the other includes a horizontal component direction and a vertical component direction. Alternatively, the vertical component directions of the first direction and the second direction are different.

In some embodiments, controlling the imaging range of the first image to change from the imaging range corresponding to the first direction to the imaging range corresponding to the second direction includes: displaying image information between the imaging range corresponding to the first direction and the imaging range corresponding to the second direction.

In some embodiments, outputting the first image in the second image collection direction collected by the aircraft includes: displaying the first image and the second image on the same interface, and/or displaying the first image and the second image on different interfaces.

In some embodiments, when displaying the first image and the second image on the same interface, the first image occupies a part of the area of the second image, or the second image occupies a part of the area of the first image.

In some embodiments, the method may further include:
Receive a first input from the user;
In response to the first input, switch the display of the first image and the second image.

In some embodiments, switching the display of the first image and the second image includes: switching the display proportions of the first image and the second image on the same interface; or switching the display interface to display the first image or the second image.

In some embodiments, the above method may further include:
Change the display manner of the first image and the second image based on the shooting direction and the flight velocity direction of the aircraft.

In some embodiments, in a case where the shooting direction is consistent with the flight velocity direction, the second image may be displayed preferentially. In some embodiments, in a case where the shooting direction is inconsistent with the flight velocity direction, the first image may be displayed preferentially.

In some embodiments, the method further includes:
Receive a second input from the user regarding the first image;
In response to the second input, control the view angle of the first image to remain unchanged.

In some embodiments, the method further includes:
Receive a third input from the user regarding the first image;
In response to the triggering of the third input, change the view angle of the first image;
In response to the end of the third input, restore the view angle of the first image.

In some embodiments, when the user touches the direction control on the first image, the view angle of the first image can be changed to the fixed view angle corresponding to that direction. However, when the user long-presses the direction control of the first image for a preset duration, the view angle of the first image is locked to that view angle, so that the user can achieve both the change and locking of the first image's view angle through a single touch operation, improving the convenience of operation.

In some embodiments, the above method may further include: displaying the first image based on obstacle information along the flight velocity direction of the aircraft.

In some embodiments, the method further includes: in a case where the distance between the aircraft and an obstacle in the direction of the view angle of the first image is less than a preset threshold, displaying prompt information on the first image, so that the user can be informed of the obstacle in the direction of the view angle of the first image and respond in time, improving the safety of the aircraft operation.

In some embodiments, the first image and the second image are received through a single transmission channel. In some embodiments, the control terminal can also display a third image different from the first image collection direction and the second image collection direction, so that the user can view images in different directions in different scenarios, improving the user's experience. The method may further include:
Display a third image different from the flight velocity direction and the shooting direction of the aircraft.

In some embodiments, the display view angle of the third image is determined based on the attitude of the control terminal of the aircraft; or,

The display view angle of the third image is determined based on the preset route direction of the aircraft.

Optionally, in addition to image information along the direction of flight velocity, the first image may also include image information from other directions to adapt to the flight mode of the aircraft. Specifically, the first image may be obtained by compositing or stitching image information from multiple directions.

In some embodiments, when the aircraft is in the process of returning to home, the first image may also include image information below the aircraft and/or image information facing the direction of the return point.

In some embodiments, when the aircraft is in the process of landing, the first image may also include image information from at least one direction in the aircraft's surround view and/or image information below the aircraft.

In some embodiments, during the process of the aircraft flying around a target object, the first image may also include image information perpendicular to the aircraft's heading and/or image information at a fixed angle to the heading.

In some embodiments, during the process of the aircraft tracking a target object while flying, the image information of the second view angle may also include image information along the direction of the aircraft's flight velocity and/or image information facing the direction of the target object.

For parts not mentioned in the embodiments of this application, reference can be made to the relevant introduction of the embodiments described in steps 101-103 above. Under the premise of no conflict, they can all be considered optional features of the embodiments of this application and will not be repeated herein.

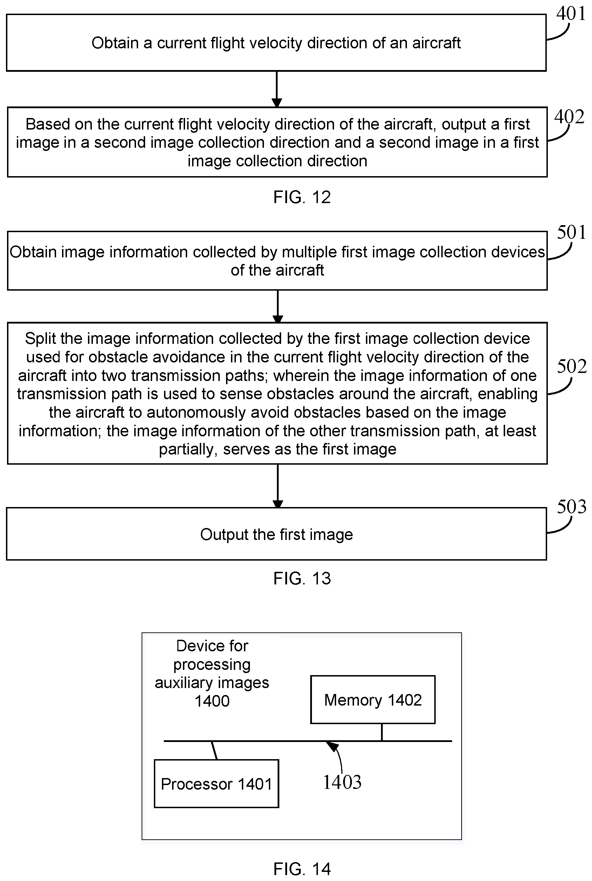

Referring to FIG. 12, this application also provides a method for processing auxiliary images, including:
Step 401: Obtain a current flight velocity direction of an aircraft.
Step 402: Based on the current flight velocity direction of the aircraft, output a first image in a second image collection direction and a second image in a first image collection direction; the second image collection direction changes with the change in the aircraft's flight velocity direction, the change in the first image collection direction is decoupled from the aircraft's flight velocity direction, and the first image is used to assist in obstacle avoidance.

Unlike the aforementioned steps 301-302, in the aforementioned step 402, the first image and the second image can be output simultaneously. The second image collection direction corresponding to the first image can change with the change in the flight velocity direction. The change in the first image collection direction corresponding to the second image is decoupled from the flight velocity direction. This way, users can simultaneously view environmental images associated with the flight velocity direction and environmental images decoupled from the flight velocity direction. This allows users to observe environmental images in the flight velocity direction in real time while also stably observing images decoupled from changes in the flight velocity direction when the flight velocity direction changes, further enhancing the user experience.

The second image can be an image of the live-view shooting screen of the photography device mounted on the aircraft. The image of the shooting screen does not change with the direction of the flight velocity, which helps users better observe the shooting effect. In other optional embodiments, the second image can also be other images decoupled from the flight velocity direction, such as images from an image collection device with a fixed view angle. The specific implementation of the above steps 401-402 can refer to the explanation of steps 301-302 above, and to avoid repetition, it will not be elaborated herein.

For parts not mentioned in the embodiments of this application, reference can be made to the relevant introduction of the embodiments described in steps 101-103 above. Under the premise of no conflict, they can all be considered optional features of the embodiments of this application and will not be repeated herein.

Referring to FIG. 13, this application also provides a method for processing auxiliary images, including:
Step 501: Obtain image information collected by multiple first image collection devices of the aircraft; where the multiple first image collection devices are used to sense obstacles around the aircraft.
Step 502: Split the image information collected by the first image collection device used for obstacle avoidance in the current flight velocity direction of the aircraft into two transmission paths; where the image information of one transmission path is used to sense obstacles around the aircraft, enabling the aircraft to autonomously avoid obstacles based on the image information; the image information of the other transmission path, at least partially, serves as the first image, where the first image is used for user viewing, and the second image collection direction corresponding to the first image changes with the change in the flight velocity direction.
Step 503: Output the first image; when the change in the flight velocity direction remains within the view angle range of the same first image collection device, the first image always comes from the same first image collection device.

Unlike the aforementioned embodiments, in steps 501-503, the image information collected by the image collection device used for sensing obstacles around the aircraft is split into two transmission paths. The image information of one transmission path is used to sense obstacles around the aircraft, enabling the aircraft to perform autonomous obstacle avoidance based on the image information. The image information of the other transmission path can be viewed by the user, allowing the user to perform corresponding control operations based on environmental images in the flight velocity direction, thereby avoiding safety issues in case autonomous obstacle avoidance fails. Meanwhile, the image information from the image collection device used for obstacle avoidance can be utilized for both the aircraft's autonomous obstacle avoidance and user viewing, effectively improving the utilization rate of image information, avoiding the need for additional image collection devices, and reducing costs.

In some embodiments, to facilitate user observation of environmental images in the flight velocity direction, the first image is an image obtained by stabilizing the image information collected by the first image collection device based on the current attitude information of the aircraft. This enables the user to view a relatively stable image, enhancing the viewing experience.

The flight velocity direction may be within the view angle of the first image collection device and can change within the view angle of the first image collection device.

Specifically, in some embodiments, the flight velocity direction may substantially coincide with the second image collection direction, and the second image collection direction may be located at the central position of the view angle of the first image. In this way, the virtual optical axis of the first image can always align with the flight velocity direction, allowing the user to observe a relatively comprehensive image of the surroundings along the flight velocity direction. Moreover, the image can change in real time as the flight velocity direction changes, achieving a smooth transition during the image change process.

In some embodiments, the first image may be obtained by stabilizing the image information collected by the first image collection device. The above method may also include: obtaining the current attitude information of the aircraft; where the first image is an image obtained by stabilizing the image information collected by the first image collection device based on the current attitude information of the aircraft. Specifically, the stabilization method may involve cropping the image information collected by the first image collection device according to the current attitude information of the aircraft to obtain a first image with a relatively stable view angle.

The specific implementation of the above steps 501-503 can also refer to the explanation of the above embodiments. To avoid repetition, it will not be elaborated herein.

For parts not mentioned in the embodiments of this application, reference can be made to the relevant introduction of the embodiments described in steps 101-103 above. Under the premise of no conflict, they can all be considered optional features of the embodiments of this application and will not be repeated herein.

The following provides a detailed description of some embodiments of the present application with reference to the accompanying drawings. In the absence of conflict, the embodiments described below and the features within these embodiments can be combined with each other.

Please refer to FIG. 14, which is a schematic block diagram of the structure of an auxiliary image processing device provided by an embodiment of the present application. The auxiliary image processing device is applied to the aforementioned aircraft 100 or control terminal 200. The control terminal may be integrated into the aforementioned aircraft 100 or may be set up independently from the aircraft 100. The control terminal is communicatively connected to the aircraft 100. The aforementioned control method can also be applied to the control terminal.

As shown in FIG. 14, the auxiliary image processing device 1400 includes a processor 1401 and a memory 1402. The processor 1401 and the memory 1402 are connected via a bus 1403. For example, the bus 1403 may be an I2C (Interintegrated Circuit) bus.

Specifically, the processor 1401 may be a Micro-controller Unit (MCU), a Central Processing Unit (CPU), or a Digital Signal Processor (DSP), among others.

Specifically, the memory 1402 may be a Flash chip, a Read-Only Memory (ROM) disk, an optical disk, a USB flash drive, or a mobile hard disk, among others.

The processor 1401 is configured to run a computer program stored in the memory 1402 and, when executing the computer program, implement the method steps described in at least one of the aforementioned steps 101-104, 201-203, 301-302, 401-402, or 501-503.

It should be noted that a person skilled in the art can clearly understand that, for the sake of convenience and brevity of description, the specific working process of the above-described auxiliary image processing device can be referred to the corresponding process in the foregoing embodiments of the control method, and will not be repeated herein.

Some embodiments of the present application further provide an aircraft, including the above-mentioned auxiliary image processing device. An embodiment of the present application further provides a control terminal, including the above-mentioned auxiliary image processing device.

Some embodiments of the present application further provide a computer-readable storage medium, where the computer-readable storage medium stores a computer program. The computer program includes program instructions. The processor executes the program instructions to implement at least one of the method steps provided in the above-described embodiments, such as steps 101-104, 201-203, 301-302, 401-402, and 501-503.

The computer-readable storage medium may be an internal storage unit of the aircraft described in any of the foregoing embodiments, such as a hard disk or memory of the aircraft. The computer-readable storage medium may also be an external storage device of the aircraft, such as a pluggable hard disk equipped on the aircraft, a Smart Media Card (SMC), a Secure Digital (SD) card, a Flash Card, and the like.

It should be understood that the terms used in this specification of the present application are merely for the purpose of describing particular embodiments and are not intended to limit the present application. As used in this specification and the appended claims, unless the context clearly indicates otherwise, the singular forms "a," "an," and "the" are intended to include the plural forms as well.

It should also be understood that the term "and/or" as used in this specification and the appended claims refers to any and all combinations of one or more of the associated listed items and includes such combinations.

The above description is only specific embodiments of the present application, but the protection scope of the present application is not limited thereto. Any person skilled in the art can easily conceive of various equivalent modifications or substitutions within the technical scope disclosed in the present application, and these modifications or substitutions shall be encompassed within the protection scope of the present application. Therefore, the protection scope of the present application shall be subject to the protection scope of the claims.

## Claims

1. A method for processing an auxiliary image, **characterized by** comprising:
obtaining a current flight velocity direction of an aircraft;
in response to the current flight velocity direction of the aircraft being inconsistent with a first image collection direction of the aircraft, obtaining image information of a first view angle collected by an image collection device of the aircraft in a second image collection direction, wherein the second image collection direction is associated with the current flight velocity direction of the aircraft and is different from the first image collection direction;
determining image information of a second view angle from the image information of the first view angle based on the current flight velocity direction of the aircraft; and
outputting the image information of the second view angle, wherein the second view angle is comprised in the first view angle, and the image information of the second view angle is used to obtain an environmental condition in the current flight velocity direction of the aircraft.

2. A method for processing an auxiliary image, **characterized by** comprising:
obtaining composite image information of a first view angle obtained by at least two image collection devices of an aircraft;
determining image information of a second view angle from the composite image information of the first view angle based on the current flight velocity direction of the aircraft, wherein the second view angle is comprised in the first view angle; and
outputting the image information of the second view angle, wherein the image information of the second view angle is used to obtain an environmental condition in the current flight velocity direction of the aircraft.

3. The method according to claim 1 or 2, **characterized in that** the flight velocity direction is used to indicate a direction of body position change of the aircraft.

4. The method according to claim 3, **characterized in that** the flight velocity direction comprises a horizontal component direction and a vertical component direction, and the determining of the image information of the second view angle from the image information of the first view angle based on the flight velocity direction of the aircraft comprises:
determining image information of the second view angle from the image information of the first view angle based on the horizontal component direction and the vertical component direction of the flight velocity direction of the aircraft.

5. The method according to claim 4, **characterized in that** the horizontal component direction comprises any one of front, rear, left, or right.

6. The method according to claim 4, **characterized in that** the vertical component direction comprises up or down.

7. The method according to claim 4, **characterized in that** the image information of the second view angle comprises image information obtained by at least two image collection devices, and the image collection directions of the at least two image collection devices respectively correspond to the horizontal component direction and the vertical component direction.

8. The method according to claim 1 or 2, **characterized in that** the flight velocity direction is located within a view angle range of the image collection device.

9. The method according to claim 1 or 2, **characterized in that** the flight velocity direction is located at a central position of the second view angle.

10. The method according to claim 1 or 2, **characterized in that** the method further comprises:
changing the second view angle based on a change of the flight velocity direction.

11. The method according to claim 10, **characterized in that** the changing of the second view angle based on the change of the flight velocity direction comprises at least one of:
changing the image collection device corresponding to the second view angle based on the change of the flight velocity direction;
changing the image collection direction of the image collection device corresponding to the second view angle based on the change of the flight velocity direction; or
changing a size of the second view angle based on the change of the flight velocity direction.

12. The method according to claim 10, **characterized in that** the changing of the second view angle based on the change of the flight velocity direction comprises:
in response to the flight velocity direction changing from a first direction to a second direction, controlling the image collection device to change from a view angle corresponding to the first direction to a view angle corresponding to the second direction.

13. The method according to claim 12, **characterized in that** in response to the flight velocity direction changing from the first direction to the second direction, the second view angle corresponding to a movement of the aircraft along the second direction changes, at least in a pitch axis direction and/or in an altitude direction of the aircraft, as compared to when the aircraft moves along the first direction, wherein one of the first direction and the second direction comprises only a horizontal component direction, and the other thereof comprises both a horizontal component direction and a vertical component direction, or the vertical component direction of the first direction is different from the vertical component direction of the second direction.

14. The method according to claim 12, **characterized in that** the controlling of the image collection device to change from the view angle corresponding to the first direction to the view angle corresponding to the second direction comprises:
obtaining image information of a view angle between the view angle corresponding to the first direction and the view angle corresponding to the second direction;
in a process of the image collection device changing from the view angle corresponding to the first direction to the view angle corresponding to the second direction, outputting the image information of the view angle between the view angle corresponding to the first direction and the view angle corresponding to the second direction.

15. The method according to claim 10, **characterized in that** the changing of the second view angle based on the change of the flight velocity direction comprises:
in response to the flight velocity direction changing and a velocity magnitude being greater than a preset threshold, changing the second view angle.

16. The method according to claim 10, **characterized in that** the changing of the second view angle based on the change of the flight velocity direction comprises:
in response to the flight velocity direction changing and a duration of maintaining a changed flight velocity direction is greater than a preset threshold, changing the second view angle.

17. The method according to claim 10, **characterized in that** the changing of the second view angle based on the change of the flight velocity direction comprises:
during a process of the aircraft moving based on a preset trajectory, predicting a change of the flight velocity direction based on the preset trajectory; and
prior to the flight velocity direction changing, changing the second view angle based on a predicted flight velocity direction.

18. The method according to claim 17, **characterized in that** the changing of the second view angle based on the change of the flight velocity direction comprises:
in response to the flight velocity changing from comprising only a horizontal direction component or a vertical direction component to comprising both a horizontal direction component and a vertical direction component, controlling the aircraft to change from obtaining the image information of the second view angle by a sensor to obtaining the image information of the second view angle by at least two sensors.

19. The method according to claim 18, **characterized in that** the at least two sensors are respectively used for obtaining image information in the horizontal direction and image information in the vertical direction.

20. The method according to claim 10, **characterized in that** the changing of the second view angle based on the change of the flight velocity direction comprises:
in response to the change of the flight velocity direction being less than a preset threshold, changing the second view angle by changing the view angle of the image collection device that obtains the image information of the second view angle, and/or by changing an attitude of the image collection device that obtains the image information of the second view angle;
in response to the change of the flight velocity direction being greater than or equal to the preset threshold, changing the image collection device that obtains the image information of the second view angle.

21. The method according to claim 1 or 2, **characterized in that** the image information of the second view angle comprises image information obtained by one or more image collection devices of the aircraft.

22. The method according to claim 21, **characterized in that** the determining of the image information of the second view angle from the image information of the first view angle based on the current flight velocity direction of the aircraft comprises:
in response to the second view angle being greater than the view angle of the image collection device of the aircraft, determining the image information of the second view angle based on the image information obtained by at least two image collection devices of the aircraft.

23. The method according to claim 22, **characterized in that** the one or more image collection devices of the aircraft are determined based on the flight velocity direction.

24. The method according to claim 23, **characterized in that** an angle between an optical axis of the one or more image collection devices and the flight velocity direction is smaller than an angle between an optical axis of other image collection devices of the aircraft and the flight velocity direction.

25. The method according to claim 1 or 2, **characterized in that** the image information of the first view angle is obtained by compositing image information from image collection devices with different view angles.

26. The method according to claim 25, **characterized in that** the image information of the second view angle is obtained by cropping the image information of the first view angle.

27. The method according to claim 25, **characterized in that** the image information of the second view angle is obtained by local rendering of the image information of the first view angle.

28. The method according to claim 1 or 2, **characterized in that** the image collection device is further used for outputting image information for autonomous obstacle avoidance.

29. The method according to claim 28, **characterized in that** the image information of the second view angle is obtained from image information for autonomous obstacle avoidance after stabilization.

30. The method according to claim 29, **characterized in that** the method further comprises:
obtaining attitude information of the aircraft; and
performing stabilization processing on the image information of the second view angle based on the attitude information.

31. The method according to claim 1 or 2, **characterized in that** the method further comprises:
obtaining image information of a third view angle by the image collection device of the aircraft; and
outputting the image information of the third view angle, wherein the third view angle is determined based on a shooting direction.

32. The method according to claim 31, **characterized in that** the image information of the third view angle is obtained from the image information of the first view angle.

33. The method according to claim 31, **characterized in that** the image information of the third view angle is obtained based on a photography device of the aircraft.

34. The method according to claim 31, **characterized in that** the image information of the third view angle and the image information of the second view angle are output through a single image transmission channel.

35. The method according to claim 1 or 2, **characterized in that** when the aircraft is in a process of returning, the image information of the second view angle further comprises at least one of: image information below the aircraft, or image information in a direction toward a return point.

36. The method according to claim 1 or 2, **characterized in that** when the aircraft is in a process of landing, the image information of the second view angle comprises image information in at least one direction of a surrounding view of the aircraft, and/or image information below the aircraft.

37. The method according to claim 1 or 2, **characterized in that** during a process of the aircraft flying around a target object, the image information of the second view angle further comprises image information perpendicular to the flight velocity direction of the aircraft, and/or image information at a fixed angle with the flight velocity direction.

38. The method according to claim 1 or 2, **characterized in that** during a process of the aircraft flying to track a target object, the image information of the second view angle comprises image information along the flight velocity direction of the aircraft, and/or image information in a direction toward the target object.

39. The method according to claim 1 or 2, **characterized in that** the image information of the second view angle is grayscale image information.

40. The method according to claim 31, **characterized in that** the outputting of the image information of the second view angle comprises:
displaying a first image corresponding to the image information of the second view angle and a second image corresponding to the image information of the third view angle.

41. The method according to claim 40, **characterized in that** the displaying of the first image corresponding to the image information of the second view angle and the second image corresponding to the image information of the third view angle comprises:
displaying the first image and the second image on a same interface, and/or, displaying the first image and the second image on different interfaces.

42. The method according to claim 41, **characterized in that** when the first image and the second image are displayed on the same interface, the first image occupies a partial area of the second image, or the second image occupies a partial area of the first image.

43. The method according to claim 41, **characterized in that** the method further comprises:
receiving a first input from a user; and
in response to the first input, switching between displaying the first image and displaying the second image.

44. The method according to claim 43, **characterized in that** the switching between displaying the first image and displaying the second image comprises:
switching a display ratio of the first image to the second image on the same interface; or
switching a display interface to display the first image or the second image.

45. The method according to claim 40, **characterized in that** the method further comprises:
based on the shooting direction of the aircraft and the flight velocity direction, changing a display mode of the first image and the second image.

46. The method according to claim 45, **characterized in that** in response to that the shooting direction is consistent with the flight velocity direction, the second image is displayed with priority.

47. The method according to claim 45, **characterized in that** in response to that the shooting direction is inconsistent with the flight velocity direction, the first image is displayed with priority.

48. The method according to claim 40, **characterized in that** the method further comprises:
receiving a second input from a user regarding the first image; and
in response to the second input, controlling a view angle of the first image to remain unchanged.

49. The method according to claim 40, **characterized in that** the method further comprises:
receiving a third input from a user regarding the first image;
in response to triggering the third input, changing a view angle of the first image; and
in response to ending of the third input, restoring the view angle of the first image.

50. The method according to claim 40, **characterized in that** the method further comprises:
based on obstacle information of the aircraft along the flight velocity direction, displaying the first image.

51. The method according to claim 50, **characterized in that** the method further comprises:
in response to a distance between the aircraft and an obstacle along a view angle direction of the first image is less than a preset threshold, displaying prompt information on the first image.

52. A method for processing an auxiliary image, **characterized by** comprising:
obtaining a current flight velocity direction of an aircraft; and
in response to that a first image collection direction of the aircraft is inconsistent with the current flight velocity direction, outputting a first image in a second image collection direction, wherein the second image collection direction is different from the first image collection direction, and the second image collection direction changes with a change in the flight velocity direction of the aircraft.

53. A method for processing an auxiliary image, **characterized by** comprising:
obtaining a current flight velocity direction of an aircraft; and
based on the current flight velocity direction of the aircraft, outputting a first image of a second image collection direction and a second image of a first image collection direction, wherein the second image collection direction changes with a change in a flight velocity direction of the aircraft, a change in the first image collection direction is decoupled from the flight velocity direction of the aircraft, and the first image is used for auxiliary obstacle avoidance.

54. A method for processing an auxiliary image, **characterized by** comprising:
obtaining image information collected by a plurality of first image collection devices on an aircraft, wherein the plurality of first image collection devices are configured to sense obstacles around the aircraft;
splitting the image information collected by the first image collection devices for obstacle avoidance in a current flight velocity direction of the aircraft into two transmission paths, wherein image information of one transmission path is used to sense obstacles around the aircraft to enable the aircraft to autonomously avoid obstacles based on the image information, and at least part of image information of another transmission path is used as a first image, wherein the first image is for user viewing, and a second image collection direction corresponding to the first image changes with a change in the flight velocity direction; and
outputting the first image, wherein when the change of the flight velocity direction remains within a view angle range of a same first image collection device, the first image always comes from the same first image collection device.

55. The method according to any one of claims 52 to 54, **characterized in that** the second image collection direction is determined based on a horizontal component direction and a vertical component direction of the flight velocity direction of the aircraft.

56. The method according to any one of claims 52 to 54, **characterized in that** that the flight velocity direction is used to indicate a direction of body position change of the aircraft.

57. The method according to claim 56, **characterized in that** the flight velocity direction comprises a component along a horizontal direction of the aircraft and a component along a vertical direction of the aircraft.

58. The method according to claim 57, **characterized in that** the flight velocity direction comprises a horizontal component direction and a vertical component direction.

59. The method according to claim 58, **characterized in that** the first image comprises image information along the horizontal component direction of the flight velocity direction and image information along the vertical component direction of the flight velocity direction.

60. The method according to claim 57, **characterized in that** the horizontal component direction comprises any one of front, rear, left, or right.

61. The method according to claim 57, **characterized in that** the vertical component direction comprises up, and/or down.

62. The method according to claim 53, **characterized in that** the aircraft comprises a first image collection device and a second image collection device, the first image is obtained based on the first image collection device, the second image is obtained based on the second image collection device, and a view angle of the first image collection device is different from a view angle of the second image collection device.

63. The method according to claim 62, **characterized in that** the first image collection device is used to perceive an environment around the aircraft.

64. The method according to claim 63, **characterized in that** the second image collection device is used to obtain image information of a photography device mounted on the aircraft.

65. The method according to claim 62, **characterized in that** the flight velocity direction is located within the view angle of the first image collection device and is changeable within the view angle of the first image collection device.

66. The method according to claim 62, **characterized in that** the flight velocity direction substantially coincides with the second image collection direction, wherein the second image collection direction is located at a central position of a view angle of the first image.

67. The method according to any one of claims 52 to 54, **characterized in that** the first image is processed and obtained based on image information of a first view angle, wherein the first image has a second view angle, and the second view angle is included within the first view angle.

68. The method according to any one of claims 52 to 54, **characterized in that** the first image is a partial image obtained by processing composite image information from at least two image collection devices.

69. The method according to any one of claims 52 to 54, **characterized in that** the method further comprises:
changing, based on a change in the flight velocity direction of the aircraft, a view angle of the first image.

70. The method according to claim 69, **characterized in that** the changing of the view angle of the first image based on the change in the flight velocity direction of the aircraft comprises:
based on the change in the flight velocity direction of the aircraft, changing an image collection direction of an image collection device corresponding to the first image;
based on the change of the flight velocity direction of the aircraft, changing an image collection device corresponding to the first image;
based on the change of the flight velocity direction of the aircraft, changing the view angle of the first image.

71. The method according to claim 69, **characterized in that** the changing of the view angle of the first image based on the change in the flight velocity direction of the aircraft comprises:
in response to the flight velocity direction changing and a flight velocity being greater than a preset threshold, changing the view angle of the first image.

72. The method according to claim 69, **characterized in that** in response to the flight velocity direction changing and a duration of maintaining a change exceeds a preset threshold, changing the view angle of the first image.

73. The method according to claim 69, **characterized in that** during a process of operating based on a preset trajectory, predicting a velocity change based on the preset trajectory, and changing the view angle of the first image prior to the velocity change.

74. The method according to claim 69, **characterized in that** in response to a flight velocity changing from a first direction to a second direction, controlling the view angle of the first image to change from a view angle corresponding to the first direction to a view angle corresponding to the second direction.

75. The method according to claim 74, **characterized in that** in response to the flight velocity direction changing from the first direction to the second direction, the view angle of the first image when the aircraft moves in the second direction changes at least in a vertical direction of the aircraft compared to a view angle when the aircraft moves in the first direction, wherein one of the first direction and the second direction comprises only a horizontal component direction, and the other comprises both a horizontal component direction and a vertical component direction, or a vertical component direction of the first direction is different from the second direction.

76. The method according to claim 74, **characterized in that** the controlling of the view angle of the first image to change from the view angle corresponding to the first direction to the view angle corresponding to the second direction comprises:
displaying image information between the view angle corresponding to the first direction and the view angle corresponding to the second direction.

77. The method according to claim 53, **characterized in that** the outputting of the first image of the second image collection direction and the second image of the first image collection direction comprises:
displaying the first image and the second image on a same interface, and/or
displaying the first image and the second image on different interfaces.

78. The method according to claim 77, **characterized in that** when the first image and the second image are displayed on the same interface, the first image occupies a partial area of the second image, or the second image occupies a partial area of the first image.

79. The method according to claim 77, **characterized in that** the method further comprises:
receiving a first input from a user; and
in response to the first input, switching between displaying the first image and displaying the second image.

80. The method according to claim 79, **characterized in that** the switching between displaying the first image and displaying the second image comprises:
switching a display ratio of the first image to the second image on the same interface; or
switching a display interface to display the first image or the second image.

81. The method according to claim 77, **characterized in that** the method further comprises:
based on the shooting direction of the aircraft and the flight velocity direction, changing a display mode of the first image and the second image.

82. The method according to claim 81, **characterized in that** in response to that the shooting direction is consistent with the flight velocity direction, the second image is displayed with priority.

83. The method according to claim 81, **characterized in that** in response to that the shooting direction is inconsistent with the flight velocity direction, the first image is displayed with priority.

84. The method according to any one of claims 52-54, **characterized in that** the method further comprises:
receiving a second input from a user regarding the first image; and
in response to the second input, controlling a view angle of the first image to remain unchanged.

85. The method according to any one of claims 52-54, **characterized in that** the method further comprises:
receiving a third input from a user regarding the first image;
in response to triggering the third input, changing a view angle of the first image; and
in response to ending of the third input, restoring the view angle of the first image.

86. The method according to any one of claims 52-54, **characterized in that** the method further comprises:
based on obstacle information of the aircraft along the flight velocity direction, displaying the first image.

87. The method according to claim 86, **characterized in that** the method further comprises:
in response to a distance between the aircraft and an obstacle along a view angle direction of the first image is less than a preset threshold, displaying prompt information on the first image.

88. The method according to claim 53, **characterized in that** the first image and the second image are received through a single transmission channel.

89. The method according to claim 53, **characterized in that** the method further comprises:
displaying a third image that differs from the flight velocity direction and a shooting direction of the aircraft.

90. The method according to claim 89, **characterized in that** a view angle of the third image is determined based on an attitude of a control terminal of the aircraft; or
a view angle of the third image is determined based on a preset route direction of the aircraft.

91. The method according to any one of claims 52-54, **characterized in that** when the aircraft is in a returning process, the first image further comprises image information below the aircraft and/or image information in a direction toward a return point.

92. The method according to any one of claims 52-54, **characterized in that** when the aircraft is in a process of landing, the first image comprises image information in at least one direction of a surrounding view of the aircraft, and/or image information below the aircraft.

93. The method according to any one of claims 52-54, **characterized in that** during a process of the aircraft flying around a target object, the first image further comprises image information at a fixed angle relative to the flight velocity direction of the aircraft, or image information perpendicular to the flight velocity direction of the aircraft.

94. The method according to any one of claims 52-54, **characterized in that** during a process of the aircraft flying to track a target object, the first image comprises image information along the flight velocity direction of the aircraft, and/or image information in a direction toward the target object.

95. The method according to claim 54, **characterized in that** the flight velocity direction is located within the view angle of the first image collection device and is changeable within the view angle of the first image collection device.

96. The method according to claim 95, **characterized in that** the flight velocity direction substantially coincides with the second image collection direction, wherein the second image collection direction is located at a central position of a view angle of the first image.

97. The method according to claim 52 or 54, **characterized in that** the method further comprises:
outputting the second image, wherein the second image is for user viewing, and the first image collection direction corresponding to the second image is a shooting direction of a main camera of the aircraft.

98. The method according to claim 97, **characterized in that** the outputting of of the first image comprises:
displaying the first image and the second image on a same interface, and/or
displaying the first image and the second image on different interfaces.

99. The method according to claim 98, **characterized in that** when the first image and the second image are displayed on the same interface, the first image occupies a partial area of the second image, or the second image occupies a partial area of the first image.

100. The method according to claim 98, **characterized in that** the method further comprises:
receiving a first input from a user; and
in response to the first input, switching between displaying the first image and displaying the second image.

101. The method according to claim 100, **characterized in that** the switching between displaying the first image and displaying the second image comprises:
switching a display ratio of the first image to the second image on the same interface; or
switching a display interface to display the first image or the second image.

102. The method according to claim 97, **characterized in that** the method further comprises:
based on the shooting direction of the aircraft and the flight velocity direction, changing a display mode of the first image and the second image.

103. The method according to claim 102, **characterized in that** in response to that the shooting direction is consistent with the flight velocity direction, the second image is displayed with priority.

104. The method according to claim 102, **characterized in that** in response to that the shooting direction is inconsistent with the flight velocity direction, the first image is displayed with priority.

105. The method according to claim 97, **characterized in that** the first image and the second image are received through a single transmission channel.

106. The method according to claim 97, **characterized in that** the method further comprises:
displaying a third image that differs from the flight velocity direction and a shooting direction of the aircraft.

107. The method according to claim 106, **characterized in that** a view angle of the third image is determined based on an attitude of a control terminal of the aircraft; or
a view angle of the third image is determined based on a preset route direction of the aircraft.

108. The method according to claim 97, **characterized in that** the method further comprises:
receiving the first image and the second image through a single transmission channel.

109. The method according to claim 54, **characterized in that** the method further comprises:
obtaining current attitude information of the aircraft; wherein the first image is an image obtained after stabilizing the image information collected by the first image collection device based on the current attitude information of the aircraft.

110. A device for processing an auxiliary image, **characterized by** comprising:
a memory and a processor, wherein
the memory is configured to store a computer program,
the processor is configured to execute the computer program and, when executing the computer program, implement the method set forth in any one of claims 1 to 109.

111. An aircraft, **characterized by** comprising:
a memory and a processor, wherein
the memory is configured to store a computer program,
the processor is configured to execute the computer program and, when executing the computer program, implement the method set forth in any one of claims 1 to 109.

112. A control terminal, **characterized by** comprising:
a memory and a processor, wherein
the memory is configured to store a computer program,
the processor is configured to execute the computer program and, when executing the computer program, implement the method set forth in any one of claims 1 to 109.

113. A readable storage medium, **characterized in that** the computer-readable storage medium stores a computer program, which, when executed by a processor, causes the processor to implement the method set forth in any one of claims 1 to 109.
